# EUROPEAN PATENT APPLICATION

(11) **EP 3 032 437 A1**
(43) Date of publication of application: **15.06.2016**
(21) Application number: 15194613.4
(22) Date of filing: 13.11.2015
(51) Int. Cl.: G06F 17/30

(54) **METHOD AND DEVICE FOR PROVIDING CONTACT INFORMATION**

(30) Priority: 09.12.2014 CN 201410751247
(71) Applicant: Xiaomi Inc., Beijing 100085 (CN)
(72) Inventor: GAO, Yi, Beijing 100085 (CN); WANG, Hongqiang, Beijing 100085 (CN); LONG, Hai, Beijing 100085 (CN)
(74) Representative: Fontenelle, Sandrine

(57) **Abstract**

The present invention relates to a method and a device for providing contact information, which improves a communication efficiency of a user on the internet. The method is applied in a server, and the method includes: obtaining (S101) keyword information input by a first user; determining (S102) contact information of at least one second user inputting same or similar keyword information as input by the first user; displaying (S103) the contact information of the at least one second user to the first user.

## Description

### TECHNICAL FIELD

The present invention relates to an Internet technology field, and more particularly, to a method for providing contact information and a device for providing contact information.

### BACKGROUND

When a user searches for related content with a keyword using a search engine, the search engine may recommend related link URLs, pages and the like to the user. For example, if the user intends to take a national civil service examination and has a lot of questions about the national civil service examination, then the user searches for information with keywords "nation, civil servant, examination" using the search engine. The search engine may recommend tremendous link URLs or pages to the user, such that the user needs to spend much time and energy to identify the reference value of the information recommended by the search engine and error information may mislead the user.

### SUMMARY

In order to overcome problems existing in the related art, the present invention provides a method for providing contact information and a device for providing contact information, which increase an efficiency of communicating via the internet.

According to a first aspect of embodiments of the present invention, there is provided a method for providing contact information, including:
obtaining keyword information input by a first user;
determining contact information of at least one second user inputting same or similar keyword information as input by the first user;
displaying the contact information of the at least one second user to the first user.

In an embodiment, determining contact information of at least one second user inputting same or similar keyword information as input by the first user includes:
searching for same or similar keyword information as input by the first user from a contact list, the contact list being stored in the server and configured to store contact information recorded in the server and keyword information input by contacts corresponding to the contact information;
obtaining first contact information corresponding to the same or similar keyword information as input by the first user from the contact list;
determining an activity of each of contacts corresponding to the first contact information;
determining the contact information corresponding to the at least one second user to be recommended to the first user according to the activity of each of contacts corresponding to the first contact information.

In an embodiment, the method further includes:
obtaining a first number of messages posted by each contact in the contact list on a site associated with the server and a second number of messages replied by each contact in the contact list on the site associated with the server;
weighting the first number and the second number by a first weight coefficient and a second weight coefficient respectively to obtain a weighted value of each contact in the contact list;
updating the activity of each contact in the contact list according to the weighted value of each contact in the contact list.

In an embodiment, the method further includes:
obtaining scoring information of each contact in the contact list on the site associated with the server;
updating the activity of each contact in the contact list according to a third weight coefficient corresponding to the scoring information of each contact in the contact list.

In an embodiment, the method further includes:
obtaining contact details and an authorization configuration of the first user;
updating the contact list according to a name of the first user, the keyword information input by the first user and the contact details of the first user;
determining whether to publish the name of the first user, the keyword information input by the first user and the contact details of the first user according to the authorization configuration of the first user.

According to a second aspect of embodiments of the present invention, there is provided a device for providing contact information, including:
a first obtaining module, configured to obtain keyword information input by a first user;
a first determining module, configured to determine contact information of at least one second user inputting same or similar keyword information as obtained by the first obtaining module;
a displaying module, configured to display the contact information determined by the first determining module to the first user.

In an embodiment, the first determining module includes:
a searching sub-module, configured to search for same or similar keyword information as input by the first user from a contact list, the contact list being stored in the server and configured to store contact information recorded in the server and keyword information input by contacts corresponding to the contact information;
an obtaining sub-module, configured to obtain first contact information corresponding to the same or similar keyword information as input by the first user searched by the searching sub-module from the contact list;
a first determining sub-module, configured to determine an activity of each of contacts corresponding to the first contact information;
a second determining sub-module, configured to determine the contact information corresponding to the at least one second user to be recommended to the first user according to the activities determined by the first determining sub-module.

In an embodiment, the device may further include:
a second obtaining module, configured to obtain a first number of messages posted by each contact in the contact list on a site associated with the server and a second number of messages replied by each contact in the contact list on the site associated with the server;
a weighting module, configured to weight the first number and the second number obtained by the second obtaining module by a first weight coefficient and a second weight coefficient respectively to obtain a weighted value of each contact in the contact list;
a first updating module, configured to update the activity of each contact in the contact list according to the weighted value of each contact in the contact list obtained by the weighting module.

In an embodiment, the device may further include:
a third obtaining module, configured to obtain scoring information of each contact in the contact list on the site associated with the server;
a second updating module, configured to update the activity of each contact in the contact list according to a third weight coefficient corresponding to the scoring information of each contact in the contact list obtained by the third obtaining module.

In an embodiment, the device may further include:
a fourth obtaining module, configured to obtain contact details and an authorization configuration of the first user;
a third updating module, configured to update the contact list according to a name of the first user, the keyword information input by the first user and the contact details of the first user;
a second determining module, configured to determine whether to publish the name of the first user, the keyword information input by the first user and the contact details of the first user according to the authorization configuration of the first user.

According to a third aspect of embodiments of the present invention, there is provided a device for providing contact information, including:
a processor;
a memory configured to store instructions executable by the processor;
in which the processor is configured to:
   obtain keyword information input by a first user;
   determine contact information of at least one second user inputting same or similar keyword information as input by the first user;
   display the contact information of the at least one second user to the first user.

In a particular embodiment, the steps of the method for providing contact information are determined by program product instructions.

Consequently, in a fourth aspect, there is provided a program product (e.g. a computer program) which, when being executed on one or more processors of a device, performs the method for providing contact information mentioned above.

This program product can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions disclosed in embodiments of the present invention can have advantageous effects as follows. By recommending the contact information to the first user according to the keyword input by the first user, the first user can find the second users with same or similar search as the search of the first user and can add at least one second user with same searching requirements as the searching requirements of the first user as a contact or a friend in a third-party instant messaging tool, thus improving the communication efficiency and facilitating the first user to solve the problem about the keyword information.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for providing contact information according to an exemplary embodiment of the present invention;
Fig. 2 is a flow chart illustrating a method for providing contact information according to a first exemplary embodiment of the present invention;
Fig. 3 is a flow chart illustrating a method for providing contact information according to a second exemplary embodiment of the present invention;
Fig. 4 is a flow chart illustrating a method for providing contact information according to a third exemplary embodiment of the present invention;
Fig. 5 is a flow chart illustrating a method for providing contact information according to a fourth exemplary embodiment of the present invention;
Fig. 6A is a schematic diagram illustrating a keyword processing page according to an exemplary embodiment of the present invention;
Fig. 6B is a schematic diagram illustrating an authorization configuration of a contact according to an exemplary embodiment of the present invention;
Fig. 6C is a schematic diagram illustrating a recommendation page according to an exemplary embodiment of the present invention;
Fig. 6D is a schematic diagram illustrating a recommended contact according to an exemplary embodiment of the present invention;
Fig. 6E is a schematic diagram of creating a contact according to an exemplary embodiment of the present invention;
Fig. 7 is block diagram illustrating a device for providing contact information according to an exemplary embodiment of the present invention;
Fig. 8 is block diagram illustrating another device for providing contact information according to an exemplary embodiment of the present invention; and
Fig. 9 is block diagram illustrating a device for providing contact information according to an exemplary embodiment of the present invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

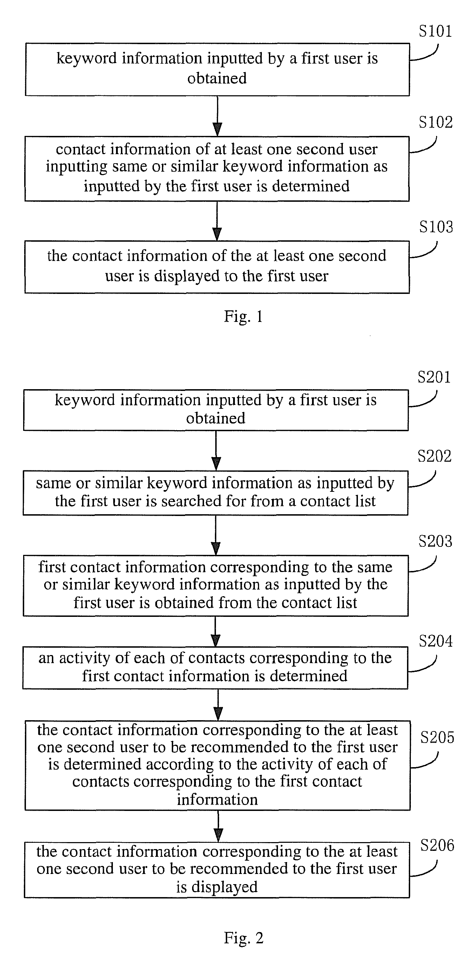

Fig 1 is a flow chart illustrating a method for providing contact information according to an exemplary embodiment of the present invention. The method for providing contact information is applied in a server. As shown in Fig. 1, the method for providing contact information includes following steps S101-S103.

In step S101, keyword information input by a first user is obtained.

In an embodiment, the first user may input the keyword information via a search engine, or may input the keyword information via an internet portal site or a portal system of an enterprise application system. The keyword information may include at least one keyword, wherein each keyword may itself include one or several words. For example, the user inputs one keyword "civil servant" for search, or inputs two keywords "civil servant, administrative ability examination" for search.

In step S102, contact information of at least one second user inputting same or similar keyword information as input by the first user is determined.

For example, the keyword information input by the user is "civil servant, administrative ability examination", contact information of at least one second user corresponding to same or similar keyword(s) (such as, civil servant, administrative ability examination, civil service examination, state examination) as the keyword information "civil servant, administrative ability examination" is determined, such that the first user may further communicate with a recommended contact regarding related matters involved with the keyword information, according to the contact information.

In step S103, the contact information of the at least one second user is displayed to the first user.

For example, the recommended contact information may be displayed to the first user via the page of the search engine. The recommended contact information may also be displayed to the first user via the internet portal site or the portal system of the enterprise application system. By displaying the recommended contact information, the first user may freely select a way of communicating with others directly according to the contact information. For example, the recommended contact information is "a nickname of a user+ a QQ number, a phone number". In this way, the user may contact the recommended contact more quickly, thus performing an effective communication.

In this embodiment, by recommending the contact information to the first user according to the keyword input by the first user, the first user may find a plurality of second users with same or similar search as input by himself/herself and may add at least one second user with same searching requirements as his/her searching requirement as a contact or a friend in a third-party instant message tool, thus the communication efficiency is improved and it is helpful for the first user to solve the problem about the keyword information.

In an embodiment, step S102 may include: searching for same or similar keyword information as input by the first user from a contact list, in which the contact list is stored in the server and configured to store contact information recorded in the server and keyword information input by contacts corresponding to the contact information; obtaining first contact information corresponding to the same or similar keyword information as input by the first user from the contact list; determining an activity of each of contacts corresponding to the first contact information (e.g. activity on a site associated with the server); determining the contact information corresponding to the at least one second user to be recommended to the first user according to the activity of each of contacts corresponding to the first contact information.

In an embodiment, the method for providing contact information may further include: obtaining a first number of messages posted by each of the contacts corresponding to the first contact information on a site associated with the server and a second number of messages replied by each of the contacts corresponding to the first contact information on the site associated with the server; weighting the first number and the second number by a first weight coefficient and a second weight coefficient respectively to obtain a weighted value of each of the contacts corresponding to the first contact information; updating the activity of each of the contacts corresponding to the first contact information according to the weighted value of each of the contacts corresponding to the first contact information.

In an embodiment, the method for providing contact information may further include: obtaining scoring information of each of the contacts corresponding to the first contact information on the site associated with the server; updating the activity of each of the contacts corresponding to the first contact information according to a third weight coefficient corresponding to the scoring information of each of the contacts corresponding to the first contact information.

In an embodiment, the method for providing contact information may further include: obtaining contact details and an authorization configuration of the first user; updating the contact list according to a name of the first user, the keyword information input by the first user and the contact details of the first user; determining whether to publish the name of the first user, the keyword information input by the first user and the contact details of the first user according to the authorization configuration of the first user.

Concerning details about how to provide contact information according to the keyword information, please refer to the following embodiments.

Here, with the above method provided in the embodiments according to the present invention, by recommending the contact information to the first user according to the keyword input by the first user, the first user may find a plurality of second users with same or similar search as input by himself/herself and may add at least one second user with a same searching requirement as his/her searching requirement as a contact or a friend in a third-party instant message tool, such that the first user may communicate with the at least one second user directly, and thus the communication efficiency is improved and it is helpful for the first user to solve the problem about the keyword information.

In the following, the technical solution provided in the embodiments according to the present invention will be described with reference to specific embodiments.

Fig. 2 is a flow chart illustrating a method for providing contact information according to a first exemplary embodiment. Referring to the above method provided in the embodiments according to the present invention, in this embodiment, the method for providing contact information may be applied in a server, and take recommending the contact information to the user according to an activity as an example to explain. As shown in Fig. 2, the method for providing contact information includes the following steps.

In step S201, keyword information input by a first user is obtained.

Concerning the detailed descriptions of step S201, reference is made to the detailed descriptions of step S101, which are not elaborated herein.

In step S202, same or similar keyword information as input by the first user is searched for from a contact list, in which the contact list is stored in the server and configured to store contact information recorded in the server and keyword information input by contacts corresponding to the contact information.

In an embodiment, the contact list may store related information of a large number of users. In order to understand the contact list in this embodiment, take Table 1 as an example to explain.

**Table 1**

| Username | Keyword | Contact details | activity |
|---|---|---|---|
| A | civil servant | webchat number: 123456 phone number: 1821231233 | 103 |
| B | administrative ability examination | QQ number: 1098765 | 603 |
| C | civil servant, administrative ability examination | webchat number: 231452 | 204 |
| D | government office | phone number: 136813423443 | 14 |
| E | postgraduate, examination | phone number: 1591023XXXX | 57 |

As shown in Table 1, keywords, contact details and corresponding activities of five users A, B, C, D and E in the contact list are shown. If the first user inputs keyword information "civil servant", a plurality of keywords (for example, "civil servant" (same), "administrative ability examination" (similar), "civil servant, administrative ability examination" (same+ similar), "government office" (similar)) may be determined from the contact list according to the keyword information "civil servant". It should be understood by those skilled in the art that Table 1 is just an exemplary example, but is not intended to limit the embodiments of the present invention.

In step S203, first contact information corresponding to the same or similar keyword information as input by the first user is obtained from the contact list.

For example, as shown in Table 1, contact information of the users A, B, C and D may be found in the above contact list.

In step S204, an activity of each of contacts corresponding to the first contact information is determined.

In an embodiment, an activity of the first user may be determined according to a first number of messages posted by the first user on a site associated with the server and a second number of messages replied by the first user on the site associated with the server. For example, if the first user is familiar with the "administrative ability examination" in the "civil service examination the first user may post a message about the "administrative ability examination" on a forum, or may activity reply questions about the "administrative ability examination" from others. Thus, the first number and the second number may be used as a reference for the activity of the first user.

In step S205, the contact information corresponding to the at least one second user to be recommended to the first user is determined according to the activity of each of contacts corresponding to the first contact information.

In an embodiment, the activities of the contacts corresponding to the first contact information may be ranked, and users with the top three activities are determined as contacts to be recommended to the first user. For example, it can be seen from Table 1 that the users with the top three activities are B, C and A, and thus the QQ number 1098765 of user B, the webchat number 231452 of user C, the webchat number 123456 of user A and the phone number 1821231233 of user A are recommended to the first user.

In step S206, the contact information corresponding to the at least one second user to be recommended to the first user is displayed.

Concerning the detailed description of step S206, reference is made to the descriptions of step S103, which are not elaborated herein.

In this embodiment, by recommending the contact information to the first user according to the activities, at least one second user with same or similar searching requirements as the first user's searching requirement may be obtained directly. The first user may add the at least one second user as a contact or a friend in the webchat, and then they can communicate with each other directly, thus enhancing the communication efficiency and facilitating the first user to solve the problem about the keyword information.

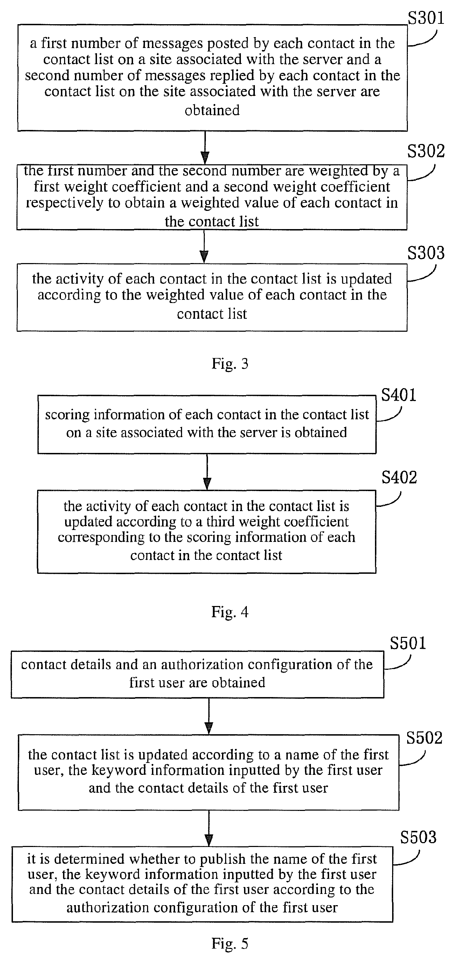

Fig. 3 is a flow chart illustrating a method for providing contact information according to a second exemplary embodiment of the present invention. Referring to the above method provided in the embodiments of the present invention, in this embodiment, the method for providing contact information may be applied in a server, and take updating an activity as an example to explain. As shown in Fig. 3, the method for providing contact information may include the following steps.

In step S301, a first number of messages posted by each contact in the contact list on a site associated with the server and a second number of messages replied by each contact in the contact list on the site associated with the server are obtained.

For example, the site may be a search engine provided by a server provider, or may be a site provided by other search engine providers providing open interfaces to the server, for example, a user AndyGao posts a message about "civil servant" on a search engine A and a search engine B. If a search engine provider A and a search engine provider B open their server interfaces to each other, then a server corresponding to the search engine A may obtain the message posted by the user AndyGao in a server corresponding to the search engine B. At this time, the search engine B is a site associated with the server corresponding to the search engine A.

In step S302, the first number and the second number are weighted by a first weight coefficient and a second weight coefficient respectively to obtain a weighted value of each contact in the contact list.

For example, the user E in the contact list posts 100 messages about "civil servant" on a search engine "www.dddd.com" and replies 150 messages to messages about "civil servant" posed by others. By weighting the first number and the second number by a first weight coefficient (such as 0.2) corresponding to the first number and a second weight coefficient (such as 0.1) corresponding to the second number respectively, an activity of the user E about "civil servant" may be obtained. For example, 100*0.2+150*0.1=35, and then 35 is added to the original activity of the user E.

In step S303, the activity of each contact in the contact list is updated according to the weighted value of each contact in the contact list.

In this embodiment, by calculating the first number of messages posted by each contact in the contact list on the site associated with the server and the second number of messages replied by each contact in the contact list on the site associated with the server and updating the activity of each contact in the contact list, an activity updating based on a big data theory (i.e. mass data analysis) is realized, such that the activities in the contact list are more credible and the recommended contact information is closer to the keyword input by the user.

Fig. 4 is a flow chart illustrating a method for providing contact information according to a third exemplary embodiment of the present invention. Referring to the above method provided in the embodiments of the present invention, this embodiment may be applied in a server, and take updating an activity as an example to explain. As shown in Fig. 4, the method for providing contact information includes following steps.

In step S401, scoring information of each contact in the contact list on a site associated with the server is obtained.

For example, a user F in the contact list posts a series of messages about "civil servant" on a search engine "www.dddd.com"; other users (F1, F2, F3 and so on) score the messages posted by the user F. For example, F1, F2 and F3 score the messages posted by the user F based on whether the messages are valuable for themselves, and the scores from F1, F2 and F3 are 4.5, 5.0 and 4.3. And then the score of the user F may be calculated, which is 4.5+5.0+4.3=13.8.

In step S402, the activity of each contact in the contact list is updated according to a third weight coefficient corresponding to the scoring information of each contact in the contact list.

For example, F1, F2 and F3 score the messages about "civil servant" posted by the user F and the resulting score is 13.8. The score 13.8 is weighted by the third weight coefficient (such as 0.5), i.e. 13.8*0.5=6.9, and then 6.9 is added to the original activity of the user F.

In this embodiment, by calculating the score information of each of the contacts in the contact list on the site associated with the server and updating the activity of each of the contacts in the contact list, an activity updating based on a big data theory (i.e. mass data analysis) is realized, such that the activities in the contact list are more credible and the recommended contact information is closer to the keyword input by the user.

It should be understood by those skilled in the art that, in order to enable the activity of a user to reflect the link (i.e. that is the relationship or correlation) between the user and a keyword, the embodiment illustrated in Fig. 3 and the embodiment illustrated in Fig. 4 may be combined to form a new embodiment. That is, by realizing a combination of calculating the first number of messages posted by the user on the site associated with the server and a second number of messages replied by the user on the site associated with the server and obtaining scoring information of the user on the site associated with the server, the link between the activity of the user and the keyword is much closer, thus improving the accuracy of recommending the contact information to the user.

Fig. 5 is a flow chart illustrating a method for providing contact information according to a fourth exemplary embodiment of the present invention. Based on the above method embodiments, in this embodiment, the method for providing contact information may further include the following steps.

In step S501, contact details and an authorization configuration of the first user are obtained.

In step S502, the contact list is updated according to a name of the first user, the keyword information input by the first user and the contact details of the first user.

In step S503, it is determined whether to publish the name of the first user, the keyword information input by the first user and the contact details of the first user according to the authorization configuration of the first user.

For example, if it is the first time that the first user searches for information with the keyword information on a search engine, a username "AndyGao" of the first user is obtained, and keyword information "civil servant, administrative ability examination" input by the first user "AndyGao" and contact details "webchat number: 956623364" are obtained. The above information is stored in the contact list so as to update the contact list. Moreover, a column may be set to store authorization configurations in the contact list. For example, if the authorization configuration is "yes", the information of the user is allowed to be published when others search for information with keywords "civil servant or administrative ability examination". If the authorization configuration is "no", the information of the user is not allowed to be published when others search for information with keywords "civil servant or administrative ability examination", whereby the personal privacy may be fully protected. Since there are always a large number of users searching on the internet using keywords, more and more information is included in the contact list, such that user information much closer to the keyword input by the user may be recommended to the user. These users may further communicate with each other regarding the keyword according to the contact details. Thus, the communication between the users on the internet is well-directed, and the communication efficiency is improved.

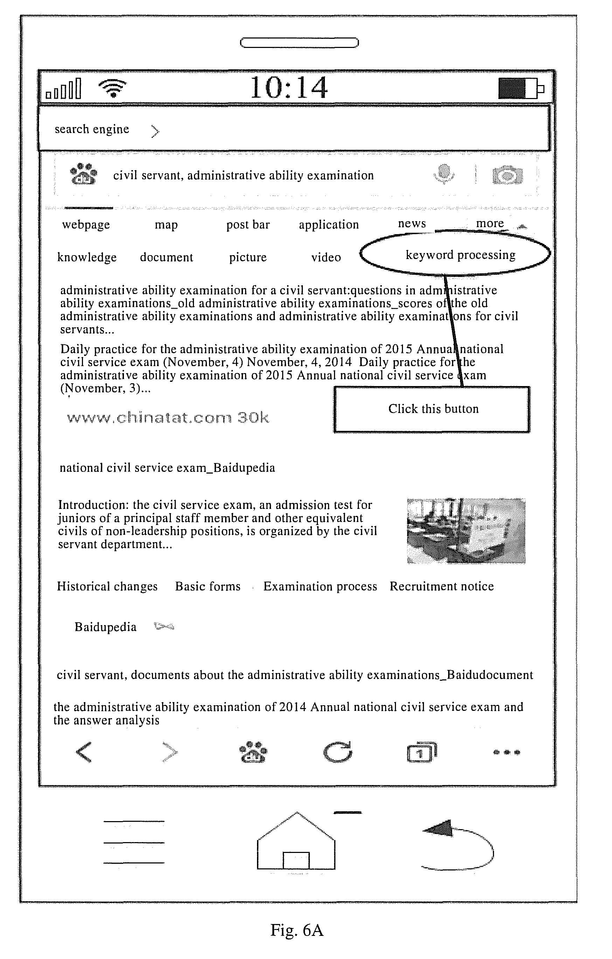

In the following, the above method embodiments will be exemplarily explained from a standpoint of the operation of a user with reference to Figs. 6A-6F.

As shown in Fig. 6A, a user logs in a server (the server may be a server of a search engine or a server of a portal site, as long as the server may provide a search function) via a personal account, and after the user searches for information with one or more keywords (such as, civil servant, administrative ability examination). If the user thinks that a certain keyword is more important and he/she is familiar with the relevant knowledge represented by this keyword, the user may register the personal information by clicking a button " keyword processing" in a resulting page and allow other users to add himself/herself as a contact by configuring the authorization.

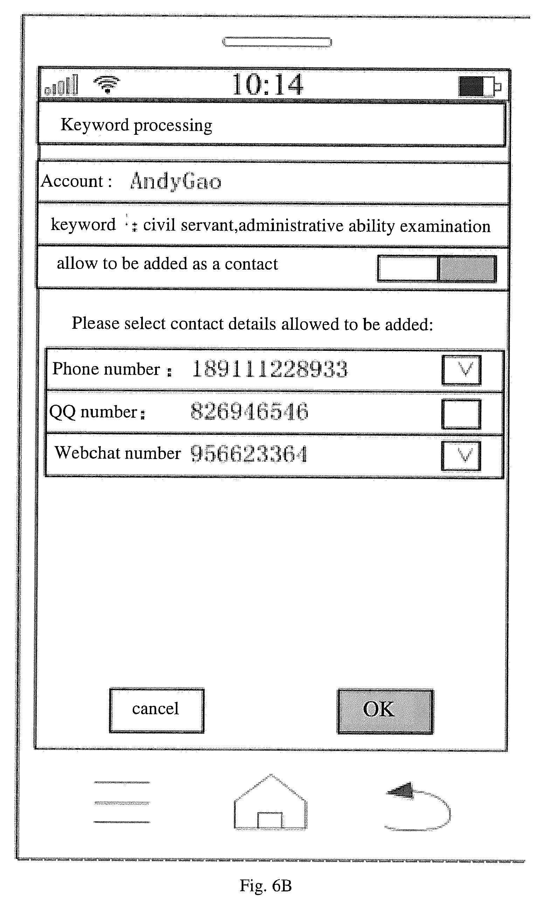

As shown in Fig. 6B, the user provides his/her personal information (such as "phone number", "webchat number" and so on) to the server. In the account information of the user, with regard to the keyword information, the user may configure the contact details and corresponding authorizations via an option "allow to be added as a contact". For example, if the user AndyGao allows other users to obtain the phone number and the webchat number when the other users search for information with keywords "civil servant, administrative ability examination", then the QQ number is not published. The publication of the contact details may be configured according to the user's confidentiality requirements. For example, the user only allows the other users to add his/her QQ number sometimes, and allows the other users to add his/her phone number sometimes, and so on.

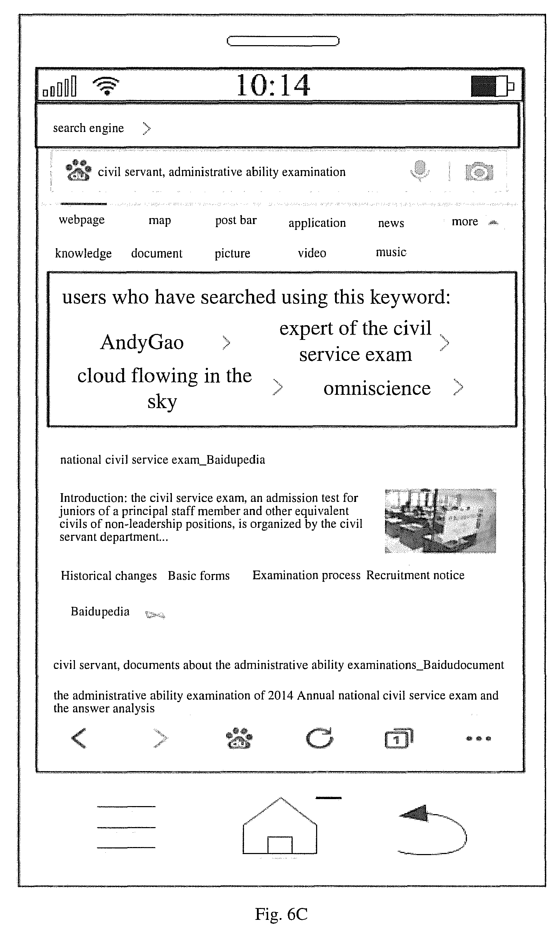

As shown in Fig. 6C, when the other users search for information with similar keywords in the search engine, the server displays recommended contact information in a search result page to the user by performing the above method embodiments. For example, the recommended contact information includes user accounts of four contacts (AndyGao, expert of the civil service exam, cloud flowing in the sky, and omniscience) and the number of contacts to be added as contacts in the third-party instant message tool.

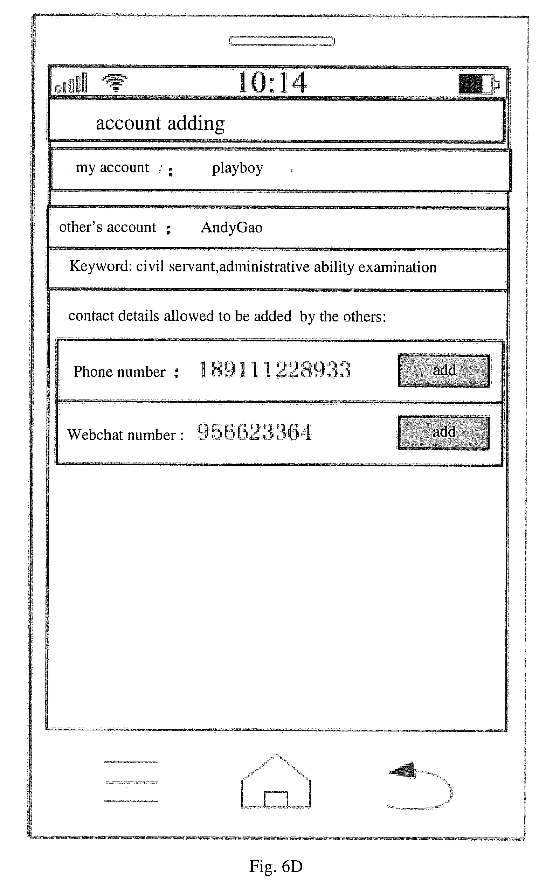

As shown in Fig. 6D, detailed information of the recommended contact and the published contact details which are allowed to be added may be viewed by clicking the recommended contact information. For example, the user AndyGao is clicked, contact details of AndyGao are displayed, which are: phone number: 189111228933 and webchat numer: 956623364.

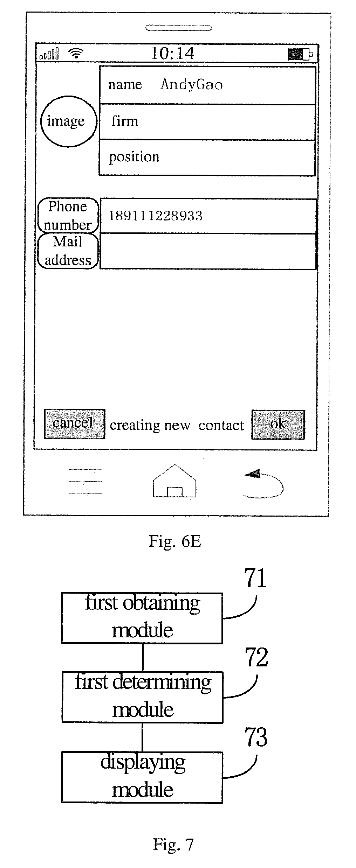

As shown in Fig. 6E, if any of the above contact details is clicked, a contact adding interface of a corresponding application is displayed, on which it indicates that this contact is added according to keywords "civil servant, administrative ability examination". In an embodiment, if the published contact detail is a phone number, an address book of the user is displayed, and the recommended user name and the published phone number are added as a contact.

According to the above descriptions of Figs. 6A-6E, in embodiments of the present invention, the user may view, in the search result page, user account information of the contacts which are allowed to be added as contacts in the third-party instant message tool under a condition of similar keywords. Thus it is convenient for users to communicate with each other regarding an interested keyword and it is beneficial to meet a friend or even to solve problems. In this way, the big data theory (i.e. mass data analysis) is demonstrated and it is helpful for the first user to solve the problem about the keyword information.

Fig. 7 is a block diagram illustrating a device for providing contact information according to an exemplary embodiment of the present invention. The device for providing contact information may be applied in a server. As shown in Fig. 7, the device for providing contact information includes a first obtaining module 71, a first determining module 72, and a displaying module 73.

The first obtaining module 71 is configured to obtain keyword information input by a first user.

The first determining module 72 is configured to determine contact information of at least one second user inputting same or similar keyword information as obtained by the first obtaining module 71.

The displaying module 73 is configured to display the contact information determined by the first determining module 72 to the first user.

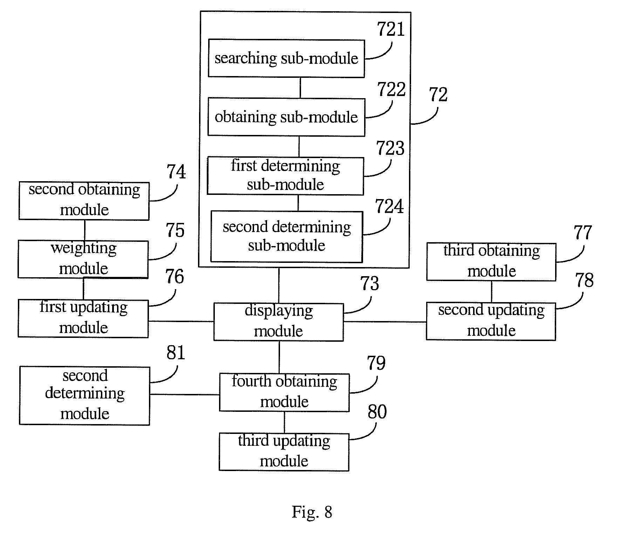

As shown in Fig. 8, the first determining module 72 includes a searching sub-module 721, an obtaining sub-module 722, a first determining sub-module 723 and a second determining sub-module 724.

The searching sub-module 721 is configured to search for same or similar keyword information as input by the first user from a contact list, in which the contact list is stored in the server and configured to store contact information recorded in the server and keyword information input by contacts corresponding to the contact information.

The obtaining sub-module 722 is configured to obtain first contact information corresponding to the same or similar keyword information searched by the searching sub-module 721 from the contact list.

The first determining sub-module 723 is configured to determine an activity of each of contacts corresponding to the first contact information obtained by the obtaining sub-module 722.

The second determining sub-module 724 is configured to determine the contact information corresponding to the at least one second user to be recommended to the first user according to the activities determined by the first determining sub-module 723.

In an embodiment, the device for providing contact information may further include a second obtaining module 74, a weighting module 75, and a first updating module 76.

The second obtaining module 74 is configured to obtain a first number of messages posted by each contact in the contact list on a site associated with the server and a second number of messages replied by each contact in the contact list on the site associated with the server.

The weighting module 75 is configured to weight the first number and the second number obtained by the second obtaining module 74 by a first weight coefficient and a second weight coefficient respectively to obtain a weighted value of each contact in the contact list.

The first updating module 76 is configured to update the activity of each contact in the contact list according to the weighted value of each contact obtained by the weighting module 75.

In an embodiment, the device for providing contact information may further include a third obtaining module 77, and a second updating module 78.

The third obtaining module 77 is configured to obtain scoring information of each contact in the contact list on a site associated with the server.

The second updating module 78 is configured to update the activity of each contact in the contact list according to a third weight coefficient corresponding to the scoring information of each contact in the contact list obtained by the third obtaining module.

In an embodiment, the device for providing contact information may further include a fourth obtaining module 79, a third updating module 80 and a second determining module 81.

The fourth obtaining module 79 is configured to obtain contact details and an authorization configuration of the first user.

The third updating module 80 is configured to update the contact list according to a name of the first user, the keyword information input by the first user and the contact details of the first user.

The second determining module 81 is configured to determine whether to publish the name of the first user, the keyword information input by the first user and the contact details of the first user according to the authorization configuration of the first user obtained by the fourth obtaining module 79.

With respect to the devices in above embodiments, the specific operation manners for individual modules therein refer to those described in detail in the embodiments regarding the methods, which are not elaborated herein again.

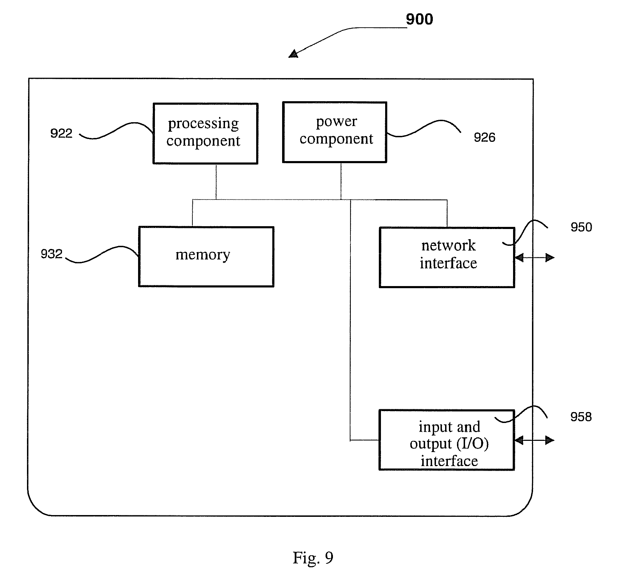

Fig. 9 is a block diagram illustrating a device suitable for providing contact information according to an exemplary embodiment of the present invention. For example, the device 900 may be provided as a server. Referring to Fig. 9, the device 900 may include a processing component 922 including one or more processors, and a memory resource represented by a memory 932 for storing instructions (such as application programs) executable by the processing component 922. The application programs stored in the memory 932 may include one or more modules, and each module may correspond to a series of instructions. Furthermore, the processing component 922 may be configured to execute the instructions so as to perform the above-mentioned method for providing contact information.

The device 900 may further include a power component 926 configured to perform a power management of the device 900, a wired or wireless network interface 950 configured to connect the device 900 to the internet, and an input and output (I/O) interface 958. The device 900 may operate an operating system stored in the memory 932, such as Windows ServerTM, Mac OS XTM, UnixTM, LinuxTM, FreeBSDTM and so on.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art.

## Claims

1. A method for providing contact information, wherein the method is applied in a server, and the method comprises:
obtaining (S101,S201) keyword information input by a first user;
determining (S102) contact information of at least one second user inputting same or similar keyword information as input by the first user;
displaying (S103,S206) the contact information of the at least one second user to the first user.

2. The method according to claim 1, wherein determining contact information of at least one second user inputting same or similar keyword information as input by the first user comprises:
searching (S202) for same or similar keyword information as input by the first user from a contact list, in which the contact list is stored in the server and configured to store contact information recorded in the server and keyword information input by contacts corresponding to the contact information;
obtaining (S203) first contact information corresponding to the same or similar keyword information as input by the first user from the contact list;
determining (S204) an activity of each of contacts corresponding to the first contact information;
determining (S205) the contact information corresponding to the at least one second user to be recommended to the first user according to the activity of each of contacts corresponding to the first contact information.

3. The method according to claim 2, further comprising:
obtaining (S301) a first number of messages posted by each contact in the contact list on a site associated with the server and a second number of messages replied by each contact in the contact list on the site associated with the server;
weighting (S302) the first number and the second number by a first weight coefficient and a second weight coefficient respectively to obtain a weighted value of each contact in the contact list;
updating (S303) the activity of each contact in the contact list according to the weighted value of each contact in the contact list.

4. The method according to claim 2, further comprising:
obtaining (S401) scoring information of each contact in the contact list on the site associated with the server;
updating (S402) the activity of each contact in the contact list according to a third weight coefficient corresponding to the scoring information of each contact in the contact list.

5. The method according to any of claims 2-4, further comprising:
obtaining (S501) contact details and an authorization configuration of the first user;
updating (S502) the contact list according to a name of the first user, the keyword information input by the first user and the contact details of the first user;
determining (S503) whether to publish the name of the first user, the keyword information input by the first user and the contact details of the first user according to the authorization configuration of the first user.

6. A device for providing contact information, wherein the device is applied in a server, and the device comprises:
a first obtaining module (71), configured to obtain keyword information input by a first user;
a first determining module (72), configured to determine contact information of at least one second user inputting same or similar keyword information as obtained by the first obtaining module (71);
a displaying module (73), configured to display the contact information determined by the first determining module (72) to the first user.

7. The device according to claim 6, wherein the first determining module (72) comprises:
a searching sub-module (721), configured to search for same or similar keyword information as input by the first user from a contact list, in which the contact list is stored in the server and configured to store contact information recorded in the server and keyword information input by contacts corresponding to the contact information;
an obtaining sub-module (722), configured to obtain first contact information corresponding to the same or similar keyword information as input by the first user searched by the searching sub-module (721) from the contact list;
a first determining sub-module (723), configured to determine an activity of each of contacts corresponding to the first contact information obtained by the obtaining sub-module (722);
a second determining sub-module (724), configured to determine the contact information corresponding to the at least one second user to be recommended to the first user according to activities determined by the first determining sub-module (723).

8. The device according to claim 7, further comprising:
a second obtaining module (74), configured to obtain a first number of messages posted by each contact in the contact list on a site associated with the server and a second number of messages replied by each contact in the contact list on the site associated with the server;
a weighting module (75), configured to weight the first number and the second number obtained by the second obtaining module (74) by a first weight coefficient and a second weight coefficient respectively to obtain a weighted value of each contact in the contact list;
a first updating module (76), configured to update the activity of each contact in the contact list according to the weighted value of each contact in the contact list obtained by the weighting module (75).

9. The device according to claim 7, further comprising:
a third obtaining module (77), configured to obtain scoring information of each contact in the contact list on the site associated with the server;
a second updating module (78), configured to update the activity of each contact in the contact list according to a third weight coefficient corresponding to the scoring information of each contact in the contact list obtained by the third obtaining module (770.

10. The device according to any of claims 7-9, further comprising:
a fourth obtaining module (79), configured to obtain contact details and an authorization configuration of the first user;
a third updating module (80), configured to update the contact list according to a name of the first user, the keyword information input by the first user and the contact details of the first user;
a second determining module (810, configured to determine whether to publish the name of the first user, the keyword information input by the first user and the contact details of the first user according to the authorization configuration of the first user.

11. A device (900) for providing contact information, comprising:
a processor (922);
a memory (932) configured to store instructions executable by the processor;
wherein the processor is configured to:
obtain keyword information input by a first user;
determine contact information of at least one second user inputting same or similar keyword information as input by the first user;
display the contact information of the at least one second user to the first user.

12. A program product having stored therein instructions that, when executed by one or more processors of a server, causes the server to perform a method for providing contact information according to any of claims 1-5.

13. A computer-readable information medium containing instructions of a program product according to claim 12.
